# EUROPEAN PATENT APPLICATION

(11) **EP 1 085 227 A1**
(43) Date of publication of application: **21.03.2001**
(21) Application number: 00900515.8
(22) Date of filing: 18.01.2000
(51) Int. Cl.: F16D 3/38

(54) **SPECIAL REINFORCEMENT SYSTEM FOR LINING BEARINGS IN CARDAN JOINTS**

(30) Priority: 23.03.1999 ES 9900590
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio
(86) International application number: ES0000016
(87) International publication number: WO0057075

(57) **Abstract**

The invention relates to a cardan yoke characterised in that it is formed by a single-piece body obtained by stamping a metal sheet with an appropriate quality, having identical or aligned circular openings (15) on the lateral wings (11) that receive said bearings or ball bearings (17), on which the axles or journals of the corresponding cross piece are adjusted. The invention specifically relates to the reinforcements (14) provided on the lateral wings (11) for better lining or holding said bearings or ball bearings (17). Said configuration does not impair assembly of the set and can be used in different types of yokes.

## Description

The invention also relates, as stated in its title, to a fork joint that is improved as for a higher rigidity and strength. The joint has been specially projected in view to be fitted in universal joints, like cardan shafts or similar and, in short, in views to its integration in this type of joints as part of the steering column of the motor vehicles, although other applications are possible in an equivalent way.

Such forks are essential elements in the joint as the rotating stresses are transmitted between the two segments or tracts in which the steering column is divided. In this case, they should provide a sufficient support for the bearings or bushes on which pivots are adjusted according to axes perpendicular to the crosspiece.

The forks comprising a single piece body obtained in a single printing operation from a metal plate having a suited thickness and quality and by means of progressive tools or a transferred progressive die have important technical benefits and advantages of weight reduction, low cost and easiness of production, for the different types of application where they are going to be used.

The main advantages provided with the idea shown in this invention are relied upon the increase of rigidity and strength of the assembly to stand the stresses existing in a cardan shaft, further allowing assembling of the whole assembly in an optimum way.

The essential feature of the present invention is provided by the aligned circular openings, which are arranged to receive the corresponding bearings or bushes. These openings are surrounded by respective edges or inner skirts. They also cooperate in providing rigidity to the assembly as well as offering a wide support surface to the bearings determining an exact alignment thereof irrespective of the thickness of the metal plate from which the assembly is obtained and according to the specific type of intended application.

According to a further feature of the invention, these skirts or edges are obtained by a material displacement process where material is forced to flow in one step of the printing process, although this invention contemplates formation by cupping or extrusion processes or any other type of process.

The fact should be stressed that, in case of being necessary, the previously mentioned inner skirts of the circular openings could not be totally closed in order to facilitate an appropriate fitting of the crosspiece and the respective bearings. To carry out this, flowing of the material through a given area is stopped, in a specific step of the printing process thus avoiding the necessity for a subsequent cutting or machining operation.

In general, said single piece body is only subjected to a final grinding operation for the holes or housings intended to receive the bearings thereby assuring the free play of the crosspiece. Such last operation can even be avoided if a sufficiently accurate printing operation can be achieved. The manufacturing costs of the fork are thus reduced to a minimum.

Further details and features of the present patent application will be apparent from the following description, which refers to the accompanying drawings that schematically represent the preferred details. These details are given by way of example, which refer to a possible case of practical embodiment, but it is not limited to the details disclosed herein; therefore this description must be considered from a illustrating point of view and without any type of limitations.

A detailed list of the various parts cited in the present patent application is given below: (10) core, (10a) extensions, (11) extensions, (12) openings, (13) lugs, (14) edges, (15) openings, (16) forks, (17) bearings, (18) joins, (19) crosspiece, (20) universal joint.

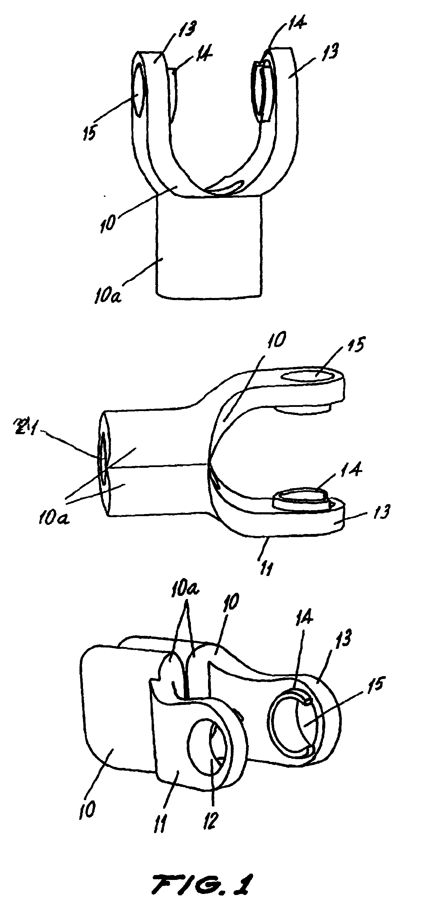

Figure n° 1 depicts the fork (16) by way of an example shown in different space positions wherein the main parts thereof are indicated by reference numerals showing the idea disclosed in the present specification.

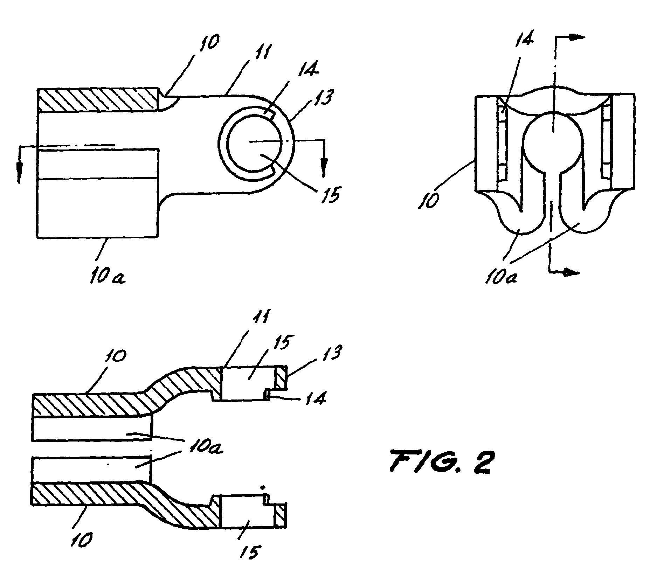

Figure n° 2 shows the main views, with the appropriate sections for a better understanding, which also correspond to the same example of the fork (16), where the most representative portions thereof are also enclosed with the purpose of clarifying the relative actual location of them relative to the assembly.

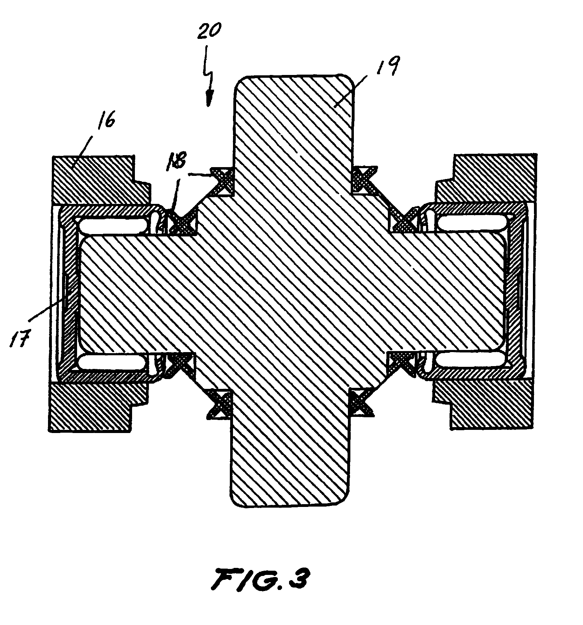

Figure n° 3 is a sectional view of the complete assembling of the full assembly of a joint (20) of a cardan shaft or the like, wherein the concept of the present invention can be understood, in such a way that it is possible to easily appreciate the advantages thereof. By means of the detailed description that it will be given below, width and variety of its possible applications will be then clear.

In one of the preferred embodiments of what is the object of the present invention, and as it can be seen in figures n° 1 and 2, there is provided a embodiment consisting of a central body or core (10) that is the base of the fork (16) which is prepared specifically to act as a rigid and integral lodging for the corresponding extremity of the tube or bar, not shown in the figures, which would be fitted in the cavity (21) and pressed by the extensions or folds (10a) of the core (10). They form the joint which will receive or transmit the rotating stresses which take place during its operation.

In the same figures, the branches (11) or asymmetric wings (13) in the mentioned fork (16), which are generally flat and parallel to one another, are shown. They are provided, next to their free extremities (16), with circular openings (15) that are equal and aligned to one another to receive the respective bearings or bushes (17), not shown in the figures.

These circular openings (15) are surrounded by respective edges or inner skirts (14), which form the main essence of the present invention since, apart from cooperating in providing the assembly the necessary degree of rigidity, they also provide a wide support surface for the bearings (17), determining an exact alignment thereof irrespective of the thickness of the metal plate from which the assembly is obtained, depending on the specific type of application that is being considered.

It is to be pointed out that these skirts or edges (14) are obtained from a single printing process with which the fork (16) is manufactured. This is carried out by means of progressive tools or transferred progressive die producing displacement of the material that is forced to flow in a specific step during the printing progression, either by cupping or extrusion processes or by any other type of process.

But, it is also to be empathized that in case of being necessary, the previously mentioned inner edges (14) in the circular openings (15) could not be completely closed, as it is shown in the example, with the purpose of facilitating the appropriate assembly of the crosspiece and the respective bearings (19). In this case, it would be necessary to limit the flowing material area in a specific step of the printing process and according to the requirements of the application to be performed, thereby avoiding the necessity for subsequent cutting or machining operations.

Providing the mentioned edges (14) during the printing process would involve significant savings as compared to forming the openings in the wings (13) by drilling in such a way that these edges (14) are obtained in the same drilling operation. However, the suitable openings (15) must, in any case, be subjected to a final grinding operation, unless obtaining the enough accuracy in the printing operation is technically possible.

Finally, in the sectional view shown in figure n° 3, the different parts forming the whole assembly can be observed in their corresponding position, once the fitting of the joint, e.g. a universal joint, has been concluded.

The section corresponding to the fork (16) shows the circular openings of the branches (11) of the fork (16) partially or totally surrounded, depending on the case, by respective edges (14) or inner skirts, arranged to clamp the corresponding bearings or bushes (17) whereon sealing joints are located and shafts or stumps are fitted aligned with the respective crosspiece (19), see figure n° 3.

As it can also be observed in this figure n° 3, and as it is accurately depicted, the fork (16) properly holds the bearings or bushes (17) to stand any possible removal of the assembly and so that rotation transmission is carried out without any problem, both in connection with the effectiveness of movement performance and noise and vibration reduction by means of the sealing joints (18) thus avoiding any metallic contact between the different pieces.

Although the different parts in the system could be made of any material according to the application to be performed, elements (16), (18) and (19) will be mainly designed so that they fulfil the functions to be carried out in an optimum way, at the same time that they cooperate for the whole assembly to be as light and cheap as possible, always keeping in mind the specific application to be considered.

It is also possible to check in this figure n° 3 that the mentioned inner edges (14) perform a reinforcing function further contributing to the form sustaining ability of the fork (16). They also determine that the axial dimension of the opening (15) is substantially greater than thickness of the metal plate from which the fork (16) is obtained so that it provides a sufficiently wide support surface to the corresponding bearing or bush (17), still in case of using a metal plate of a relatively reduced thickness.

Also, it is also to be pointed out that during the normal operation of the joint an overstress may cause partial or total loss of some of the bearings (17). The invention keeps the functionality of the whole joint in an optimum condition due to the ability of the skirts or inner edges of the branches (11) to prevent the fork (16) and respective crosspiece (19) from being disconnected.

It is understood that the invention is not at all limited to the disclosed and depicted example of preferred embodiment but, inside its essentiality, it admits a number of changes, some of which have already been pointed out and all them will be considered understood in the scope of protection of the present invention.

Once the invention has been sufficiently described in accordance to the enclosed drawings, it is understood that any modification can be introduced as appropriate, provided that variations may alter the essence of the invention as summarised in the appended claims.

## Claims

1. "SPECIAL REINFORCING SYSTEM FOR HOUSING BEARINGS IN UNIVERSAL JOINTS" used among other mechanical solutions to all those junctions between shafts which require such type of joints, characterized in that it is integrated inside a fork (16) comprising a single piece body or core essentially obtained by a printing process from a metal plate fitted by any coupling means to the end of the corresponding shaft and from which two symmetrical, generally flat, parallel wings or branches (11) extend diametrically opposed to one another to said body, said wings or branches (11) being provided, at their free ends or lugs (13), with respective circular aligned openings (15) having an open edge (14) acting as a reinforcing element providing the fork (16) with form sustaining ability and an optimum fastening of the bearings or bushes (17) to stand any removal of the assembly and to optimally perform the turn transmission.

2. "SPECIAL REINFORCING SYSTEM FOR HOUSING BEARINGS IN UNIVERSAL JOINTS" as claimed in claim 1, characterized in that it is integrated inside a fork (16) comprising a single piece body obtained in an only printing operation from a metal plate having a suitable thickness and quality and by means of progressive tools or a transferred progressive die.

3. "SPECIAL REINFORCING SYSTEM FOR HOUSING BEARINGS IN UNIVERSAL JOINTS", integrated in a fork (16), as claimed in claims 1 and 2, characterized in that the edge (14) that surrounds each one of the openings (15) is obtained by displacement of the material which is forced to flow in a printing process step, so that a skirt or inner edge (14) is formed around said opening thus increasing rigidity and strength of the assembly to stand the existing stresses in a cardan shaft so that the axial dimension of said opening (15) is substantially greater than thickness of the metal plate from which the assembly is obtained, such skirt or edge (14) being manufactured either by cupping or extrusion processes, or by any other type of process.

4. "SPECIAL REINFORCING SYSTEM FOR HOUSING BEARINGS IN UNIVERSAL JOINTS" integrated in a fork (16), as claimed in claims 1 and 2, characterized in that in case of being necessary, said skirts or inner edges (14) in the circular openings (15) of the fork (16) are not completely closed to facilitate an appropriate assembly of the crosspiece (19) and the respective bearings (17), then being necessary to limit the flowing material area in an specific step of the printing process and according to the requirements of the application to be performed, thereby avoiding the necessity for subsequent cutting or machining operations.
